# EUROPEAN PATENT APPLICATION

(11) **EP 1 394 726 A2**
(43) Date of publication of application: **03.03.2004**
(21) Application number: 03019513.5
(22) Date of filing: 28.08.2003
(51) Int. Cl.: G06K 9/46

(54) **Image processing for pattern recognition using edge detection and projections along predetermined directions**

(30) Priority: 30.08.2002 JP 2002255491
(71) Applicant: Yagi, Masakazu, Suita-shi, Osaka 565-0875 (JP); Shibata, Tadashi, Tokyo 135-0044 (JP); Rohm Co., Ltd., Kyoto-shi Kyoto 615-8585 (JP)
(72) Inventor: Yagi, Masakazu, Suita-shi Osaka 565-0875 (JP); Shibata, Tadashi, Tokyo 135-0044 (JP)
(74) Representative: VOSSIUS & PARTNER

(57) **Abstract**

The present invention enables recognition of a similar image as a similar image data when an image processing of the similar image is performed, and precisely recognizes a relatively complicated image. The present invention includes: a vector generating section 1 for extracting an image data of a region that is defined corresponding to a predetermined position inside an inputted image and expressing a vector of this image data; a storage section 2 having a plurality of pattern groups that contain at least one reference pattern belonging to a predetermined class; a similarity calculating section 3 for checking the vectorized image data with each of the reference patterns, and evaluating a similarity between each of the reference patterns and the image data; and a WTA circuit 4 for performing a predetermined calculation on each evaluation value of the similarity to thereby determine at least one evaluation value. In the present invention, the class of the reference pattern that corresponds to the determined evaluation value is identified, and the evaluation value and the identified class of the reference pattern are made to correspond to the predetermined position.

## Description

This application is based upon and claims the benefit of priority from the prior Japanese Patent Application No. 2002-255491, filed on August 30, 2002, the entire contents of which are incorporated herein by reference.

The present invention relates to an image processing method, a storage medium for storing the image processing method, and an image processing device, and is particularly preferable to be used in an image processing for extracting a characteristic of an image.

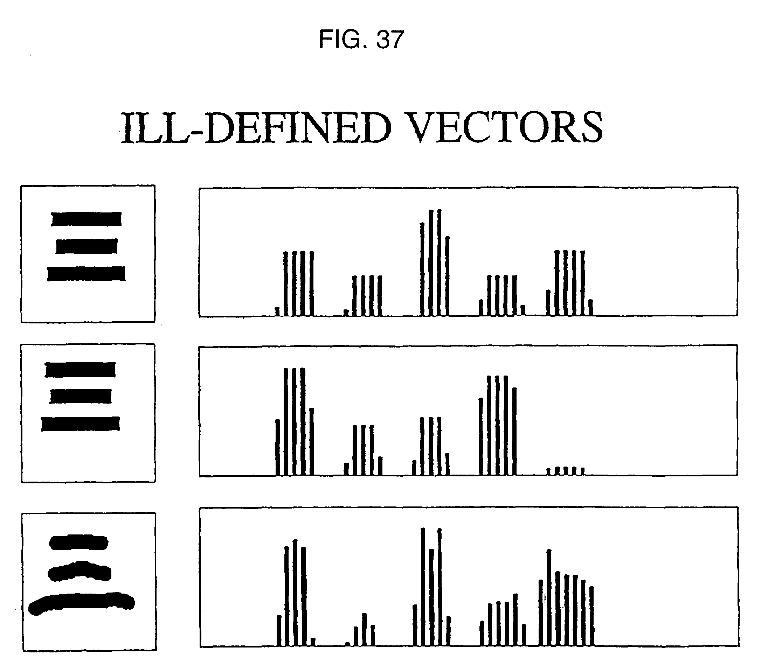

As a method for storing information of an image that is recognized by a CCD image sensor or the like, for example, a method shown in Figs. 37A to 37C is known. Figs. 37A to 37C show that one Chinese character that means "three" is photoelectrically converted by a two-dimensional CCD image sensor and is recognized as a one-dimensional data obtained by aligning brightness information of each pixel row from the top end to the bottom end of the CCD image sensor in one line.

However, when the Chinese character "three" is converted into the one-dimensional data by the method shown in Figs. 37A to 37C, the converted one-dimensional data differs largely in each case shown in Figs. 37A to 37C, even though the character is recognized as the same "three" by human eyes.

Specifically, when the Chinese character "three" is converted into the one-dimensional data by the method shown in Figs. 37A to 37C, if the position of the character is only displaced to the top side as shown in Fig. 37B, the completely different data from that in Fig. 37A is recognized. Further, when lines are only bent as shown in Fig. 37C, the completely different data from that of the "three" having straight lines shown in Fig. 37A is recognized.

As described above, when an image is recognized by a publicly known method, a completely different image data is recognized due to factors such as a position of the image, a size of the image and so on, even though the image is recognized as the same image by human eyes.

The present invention is made to solve such problems, and an object thereof is to provide an image processing device and an image processing method, a computer program product and a storage medium that enable recognition of a similar image as a similar image data when an image processing of the similar image is performed, and are capable of precisely recognizing a relatively complicated image.

The image processing device of the present invention is for processing an image data of an inputted image and extracting semantic information contained in the image data, and the image processing device includes:
a first unit having a plurality of pattern groups that contain at least one reference pattern belonging to a predetermined class;
a second unit for extracting the image data of a region that is defined corresponding to a predetermined position inside the inputted image, checking the image data with each of the reference patterns contained in each of the pattern groups, and evaluating a similarity between each of the reference patterns and the image data; and
a third unit for performing a predetermined calculation on each evaluation value of the similarity to determine at least one evaluation value, identifying the class of the reference pattern corresponding to the determined evaluation value, and making the evaluation value and the identified class of the reference pattern correspond to the predetermined position.

In one aspect of the image processing device of the present invention, the evaluation value and the class are identified for each of a plurality of the predetermined positions of the inputted image, and the evaluation value and the class are made to correspond to the plurality of the predetermined positions to thereby create a distribution map.

In one aspect of the image processing device of the present invention, it includes a fourth unit for creating a one-dimensional data row from the distribution map, and the fourth unit performs a process of adding the number of predetermined positions belonging to the same class in a predetermined direction.

In one aspect of the image processing device of the present invention, it includes a fifth unit for creating a one-dimensional data row from the distribution map, and the fifth unit performs a process of adding the evaluation value that corresponds to the predetermined position belonging to the same class in a predetermined direction.

In one aspect of the image processing device of the present invention, the plurality of the pattern groups are categorized in at least two categories, each of the pattern groups that belongs to a first category serves to identify the evaluation value and the class at the predetermined position of the inputted image, and each of the pattern groups that belongs to a second category is given a meaning that, when each of the pattern groups is selected corresponding to the predetermined position of the inputted image, the reference pattern does not exist for the position.

In one aspect of the image processing device of the present invention, it includes a sixth unit for expressing a vector of the image data of the region that is defined corresponding to the predetermined position inside the inputted image, and the second unit retains each of the reference patterns as a vector and checks this vector with the vector of the image data to evaluate the similarity.

The image processing method of the present invention is for processing an image data of an inputted image and extracting semantic information contained in the image data, and the image processing method includes:
a first step of extracting the image data of a region that is defined corresponding to a predetermined position inside the inputted image;
a second step of storing a plurality of pattern groups that contain at least one reference pattern belonging to a predetermined class, checking the image data with each of the reference patterns contained in each of the pattern groups, and evaluating a similarity between each of the reference patterns and the image data; and
a third step of performing a predetermined calculation on each evaluation value of the similarity to determine at least one evaluation value, identifying the class of the reference pattern corresponding to the determined evaluation value, and making the evaluation value and the identified class of the reference pattern correspond to the predetermined position.

In one aspect of the image processing method of the present invention, the evaluation value and the class are identified for each of a plurality of the predetermined positions of the inputted image, and the evaluation value and the class are made to correspond to the plurality of the predetermined positions to thereby create a distribution map.

In one aspect of the image processing method of the present invention, it includes a fourth step for creating a one-dimensional data row from the distribution map, and the fourth step performs a process of adding the number of predetermined positions belonging to the same class in a predetermined direction.

In one aspect of the image processing method of the present invention, it includes a fifth step for creating a one-dimensional data row from the distribution map, and the fifth step performs a process of adding the evaluation value that corresponds to the predetermined position belonging to the same class in a predetermined direction.

In one aspect of the image processing method of the present invention, the plurality of the pattern groups are categorized in at least two categories, each of the pattern groups that belongs to a first category serves to identify the evaluation value and the class at the predetermined position of the inputted image, and each of the pattern groups that belongs to a second category is given a meaning that, when each of the pattern groups is selected corresponding to the predetermined position of the inputted image, the reference pattern does not exist for the position.

In one aspect of the image processing method of the present invention, it includes a sixth step for expressing a vector of the image data of the region that is defined corresponding to the predetermined position inside the inputted image, and the second step retains each of the reference patterns as a vector and checks this vector with the vector of the image data to evaluate the similarity.

The computer program product of the present invention for image processing includes, when processing an image data of an inputted image and extracting semantic information that is contained in the image data:
a first program code means for extracting the image data from a region that is defined corresponding to a predetermined position inside the inputted image;
a second program code means for storing a plurality of pattern groups that contain at least one reference pattern belonging to a predetermined class, checking the image data with each of the reference patterns contained in each of the pattern groups, and evaluating similarity between each of the reference patterns and the image data; and
a third program code means for performing a predetermined calculation on each evaluation value of the similarity to determine at least one evaluation value, identifying the class of the reference pattern corresponding to the determined evaluation value, and making the evaluation value and the identified class of the reference pattern correspond to the predetermined position.

The computer readable storage medium of the present invention is for storing a computer program product for image processing, and the computer program product includes, when processing an image data of an inputted image and extracting semantic information that is contained in the image data:
a first program code means for extracting the image data from a region that is defined corresponding to a predetermined position inside the inputted image;
a second program code means for storing a plurality of pattern groups that contain at least one reference pattern belonging to a predetermined class, checking the image data with each of the reference patterns contained in each of the pattern groups, and evaluating similarity between each of the reference patterns and the image data; and
a third program code means for performing a predetermined calculation on each evaluation value of the similarity to determine at least one evaluation value, identifying the class of the reference pattern corresponding to the determined evaluation value, -and making the evaluation value and the identified class of the reference pattern correspond to the predetermined position.

Hereinafter, preferred embodiments being applied with the present invention will be explained in detail with reference to the drawings.
Fig. 1A is a schematic diagram showing a schematic configuration of an image processing device of a first embodiment, and Fig. 1B is a schematic diagram showing respective reference patterns of a pattern group 9;
Fig. 2 is a schematic diagram showing images of numeric characters 0(zero) to 9 of 72 pt Times New Roman font used in the first embodiment;
Fig. 3 is a schematic diagram showing characters of 72 pt Euclid font;
Fig. 4 is a two-dimensional distribution map for a 150 × 150 pel image containing a numeric character "0(zero)" among the characters of 72 pt Euclid font shown in Fig. 3;
Fig. 5 is a two-dimensional distribution map for a 150 × 150 pel image containing a numeric character "4" among the characters of 72 pt Euclid font shown in Fig. 3;
Fig. 6 is a circuit configuration diagram showing a vector generating section in Fig. 1;
Fig. 7 is a microphotograph of the surface of a PAP-converted VLSI chip;
Fig. 8 is a schematic diagram showing a measurement result of a circuit of the vector generating section;
Fig. 9 is a circuit diagram showing a basic circuit for retaining a data for one vector element and performing a similarity calculation;
Fig. 10 is a characteristic diagram showing a functional characteristic of the basic circuit of Fig. 9;
Fig. 11 is a schematic diagram for explaining the functional characteristic of the basic circuit of Fig. 9;
Fig. 12 is a schematic diagram of storing a template vector and calculating a similarity thereof;
Fig. 13 is a schematic diagram of storing a plurality of template vectors and calculating similarities thereof;
Fig. 14 is a characteristic diagram showing a result of storing a plurality of template vectors and calculating similarities thereof;
Fig. 15 is a schematic diagram showing a schematic configuration of an image processing device according to a second embodiment;
Fig. 16 is a two-dimensional distribution map for a 150 × 150 pel image containing a numeric character "O(zero)" among the characters of 72 pt Euclid font;
Fig. 17 is a two-dimensional distribution map for a 150 × 150 pel image containing a numeric character "4" among the characters of 72 pt Euclid font;
Fig. 18 is a two-dimensional distribution map for a 150 × 150 pel image containing a character "B" among the characters of 72 pt Euclid font;
Figs. 19A and 19B are two-dimensional distribution maps for 150 × 150 pel images respectively containing characters "0(zero) and "B" of 72 pt Athletic font;
Fig. 20A is a two-dimensional distribution map for a 150 × 150 pel image containing a character "4" of 72pt Euclid font, and Fig. 20B is a two-dimensional distribution map for a 150 × 150 pel image containing the character "4" of 86 pt Euclid font that is an objective image enlarged by 20%;
Figs. 21A and 21B are two-dimensional distribution maps for 150 × 150 pel images respectively containing hand-written characters "4" and "B";
Fig. 22 is a two-dimensional distribution map for an image of a hand-written character "4" that is partly missing;
Figs. 23A and 23B are schematic diagrams showing a technique for converting a two-dimensional distribution map generated using a technique of the second embodiment into a one-dimensional numeric value row (vector) ;
Fig. 24 is a schematic diagram showing one-dimensional numeric value rows for 150 × 150 pel images respectively containing characters "A," "B," "C," "D," and "E" of 72 pt Euclid font;
Fig. 25 is a schematic diagram showing one-dimensional numeric value rows for 150 × 150 pel images respectively containing hand-written characters "4" and "B";
Fig. 26 is a schematic diagram showing a one-dimensional numeric value row for a 150 × 150 pel image containing a hand-written character "4" that is partly missing;
Fig. 27 is a schematic diagram showing another technique for converting from a two-dimensional distribution map generated using the technique of the second embodiment into a one-dimensional numeric value row (vector);
Fig. 28 is a schematic diagram showing one-dimensional numeric value rows for 150 × 150 pel images respectively containing hand-written characters "4" and "B";
Fig. 29 is a schematic diagram showing a one-dimensional numeric value row for 150 × 150 pel image containing hand-written character "4" that is partly missing;
Fig. 30 is a schematic diagram showing a group of numeric characters of 72 pt Euclid font;
Fig. 31 is a two-dimensional distribution map-for a 180 × 350 pel image containing the numeric characters of 72 pt Euclid font shown in Fig. 30;
Fig. 32 is a schematic diagram showing an image of overlapped numeric characters "4" and "7" of 72 pt Euclid font;
Fig. 33 is a two-dimensional distribution map for a 150 × 150 pel image containing the overlapped numeric characters shown in Fig. 32;
Fig. 34 is a schematic diagram showing an image of hand-written numeric characters that are partly missing;
Fig. 35 is a two-dimensional distribution map for the image of the hand-written numeric characters shown in Fig. 34;
Fig. 36 is a schematic diagram showing an internal configuration of a personal user terminal; and
Fig. 37 is a schematic diagram showing a conventional method of image recognition.

### -First Embodiment-

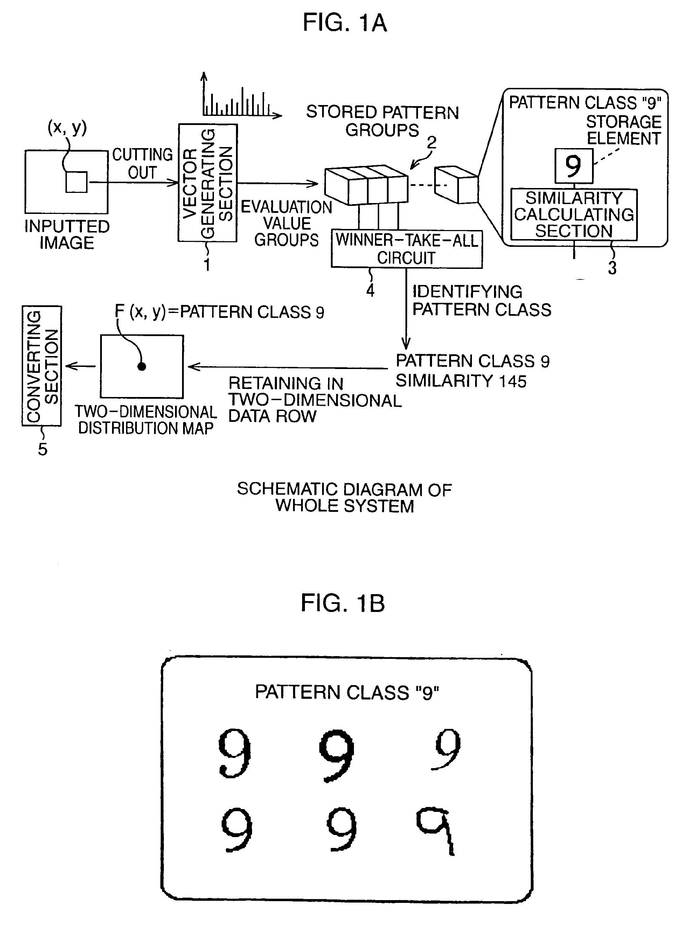

Fig. 1A is a schematic diagram showing a schematic configuration of an image processing device of a first embodiment.

As shown in Fig. 1A, this image processing device includes: a vector generating section 1 for extracting an image data of a region (x, y) that is defined corresponding to a predetermined position inside an inputted image and expressing a vector of this image data; a storage section 2 having a plurality of pattern groups that contain at least one reference pattern belonging to a predetermined class; a similarity calculating section 3 for checking the vectorized image data with each of the reference patterns contained in each of the pattern groups, and evaluating a similarity between each of the reference patterns and the image data; and a winner-take-all circuit 4 for performing a predetermined calculation on each evaluation value of the similarity to thereby determine at least one evaluation value. Note that the winner-take-all circuit is not necessarily used here. Also, it should not necessarily extract only one evaluation value, and a plurality of the evaluation values may be determined depending on the case.

This image processing device identifies a class of the reference pattern that corresponds to the determined evaluation value, and makes the evaluation value and the identified class of the reference pattern correspond to the predetermined position (for example, f(x, y) = class 9). The image processing device includes a converting section 5 for identifying the evaluation value and the class for each of a plurality of the predetermined positions on the inputted image, making the evaluation value and the class correspond to the plurality of the predetermined positions to create a two-dimensional distribution map, and further creating a one-dimensional data row from the distribution map as described later.

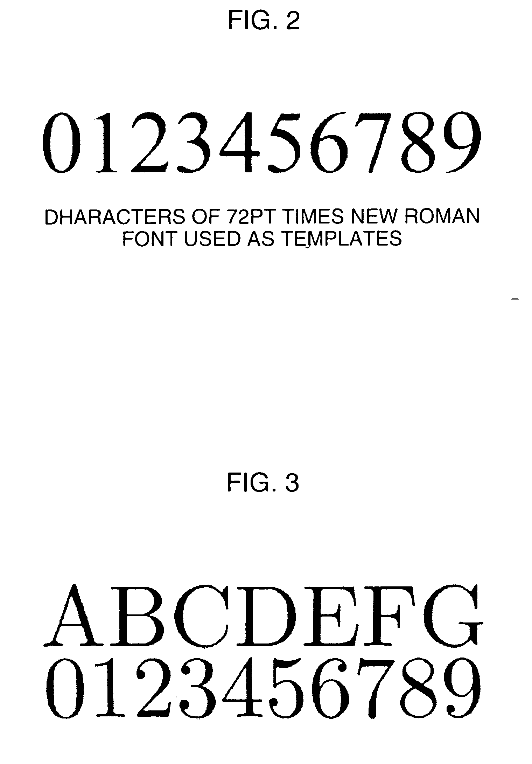

The storage section 2 has, for example, ten template groups as the pattern group. However, the number of template groups is not limited to ten, and it may be 100 or 1000. Additionally, it is also possible to apply a learning algorithm to a number of sample groups to thereby decrease the number of templates. Each of the template groups has one vector expression that is generated by the after-mentioned PAP (Principal Axis Projection) technique (refer to the patent application (1)). In this embodiment, images of numeric characters 0 (zero) to 9 of 72 pt Times New Roman font as shown in Fig. 2 are converted into the vector expressions by the PAP technique, and these vector expressions are retained in ten separate template groups where the numbers being given a meaning as the pattern class thereof. Here, the vector expression retained by the template is not necessarily generated from such a character font, and also the conversion technique to the vector expression is not necessarily the PAP technique. Further, a case of one pattern group having one vector expression (reference pattern) is presented as an example here, but the number thereof should not necessarily be one. For example, as shown in Fig. 1B, a plurality (six in this case) of different reference patterns may be used.

In this image processing device, first, a partial image of 64 × 64 having (x, y) as the center is cut out from a given inputted image (Step 1). Here, the position of (x, y) should not necessarily be the center of the partial image. Also, the size to be cut out should not necessarily be 64 × 64.

Next, the partial image is inputted to the vector generating section 2 and converted into a vector expression by the PAP technique (refer to the articles (1-4)) (Step 2). Here, when converting from the two-dimensional partial image into the vector expression, the PAP technique should not necessarily be used (a generating technique of vector expressions from two-dimensional images). (patent application (1)) Japanese Patent Laid-open No. Hei 10-326253
(1) Masakazu Yagi, Masayoshi Adachi, and Tadashi Shibata, "A Hardware-Friendly Soft-Computing Algorithm for Image Recognition," Proceedings of 10^{th} European Signal Processing Conference (EUSIPCO 2000), pp. 729-732, Tampere, Finland, Sept 4-8, 2000.
(2) Masakazu Yagi and Tadashi Shibata, "A Human-Perception-like Image Recognition System based on PAP Vector Representation with Multi Resolution Concept," in the Proceedings of 2002 IEEE International Conference on Acoustics, Speech, and Signal Processing (ICASSP 2002), Vol. I, pp.1041-1048, Florida, May 13-17, 2002.
(3) Masakazu Yagi, Tadashi Shibata and Kenji Takada, "Optimizing Feature-Vector Extraction Algorithm from Grayscale Images for Robust Medical Radiograph Analysis," in press in The Proceedings of Fourth International Conference on Multimedia and Image Processing (IFMIP 2002), Orland, June 9-13, 2002.
(4) Masakazu YAGI, Tadashi SHIBATA, and Kenji TAKADA, "Human-Perception-Like Image Recognition System Based on the Associative Processor Architecture," to be published in the Proceedings of XI European Signal Processing Conference, Sept 3-6, 2002 Toulouse, France (2002).

The evaluation values of the similarities between the vector expression generated from the partial image that is cut out from the inputted image and all the reference patterns as vector expressions existing in all the pattern groups stored in the system are generated by the similarity calculating section 3 using a Manhattan distance calculation (Step 3). Here, the calculation of the evaluation value of the similarity should not necessarily be performed on all the pattern groups. For example, it is possible that the calculation of the similarity is performed on a part of the pattern groups. Also, the calculation of the similarity should not necessarily be performed using the Manhattan distance calculation. A Euclidean distance calculation, a histogram intersection, a Kullback distance or the like may be used (a calculating technique of a distance between vectors).

Next, among the evaluation values of the similarities that are calculated by the above-described calculating technique of a distance between vectors, the pattern group with the highest similarity is determined, and the pattern group having the evaluation value of this similarity is identified (Step 4). Next, pattern information is retained on a two-dimensional distribution map at position information (x, y). Here, the system also retains similarity information simultaneously with the pattern information. Here, the determined pattern group is one, but it should not necessarily be one. Also, a manner of the determination is defined such that the pattern group with the highest similarity among the similarity evaluation values is selected, but it should not necessarily follow this manner. For example, there may be a case of using the evaluation values of the whole template groups to evaluate them as a group, or a case of using an average of a plurality of the high-rank evaluation values among the respective template groups. Further, there may be a case of selecting the pattern group having more of the pattern classes that are within a plurality of the high-rank pattern classes of the whole.

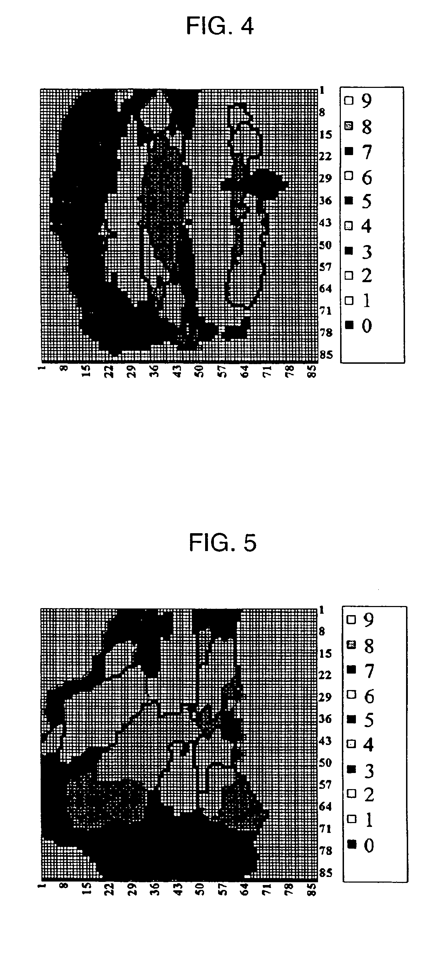

In Fig. 4, there is shown an example of applying the above-mentioned method on a 150 × 150 pel image containing a numeric character "0(zero)" among the characters of 72 pt Euclid font shown in Fig. 3. Here, this image size may not necessarily be 150 × 150 pel. Additionally, an example of applying the above-mentioned method on a similar image containing a numeric character "4" is shown in Fig. 5. By using such expressions, it is realized to decompose an objective character into several components to thereby extract information.

### -Configuration of the vector generating section-

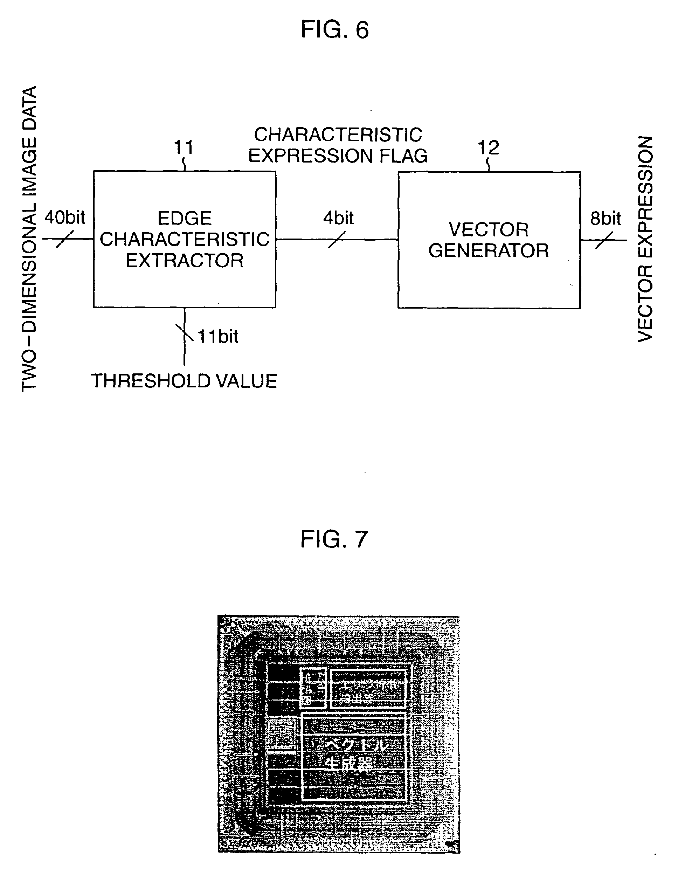

Here, a mounting of the vector generating section 1 shown in Fig. 1A by a VLSI technology is performed (refer to the article (5)). The block diagram of a circuit thereof is shown in Fig. 6.

A PAP (Principal Axis Projection)-converted VLSI is largely separated into two blocks. First, an edge characteristic extractor 11 is provided for extracting an edge characteristic from an inputted two-dimensional image data to create a characteristic expression flag, and a vector generator 12 to which the characteristic expression flag is inputted is provided. The PAP-converted VLSI is configured with such a configuration. The picture of a chip thereof is shown in Fig. 7.

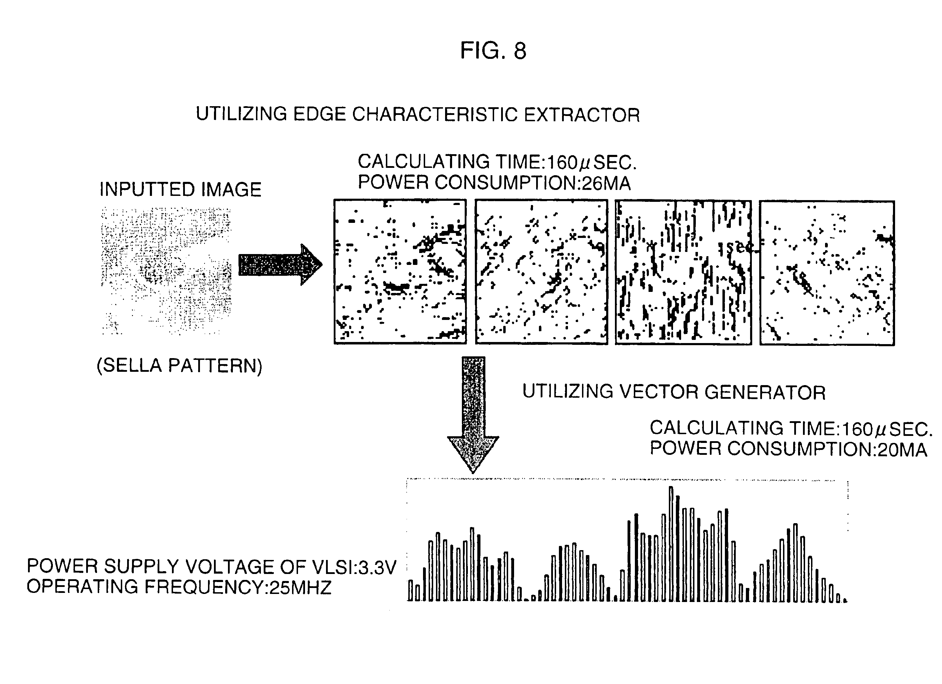

A measurement result of this circuit is shown in Fig. 8.

As shown in Fig. 8, a function for calculating a conversion of an image of 64 × 64 pixels into a 64-dimensional vector row in 340 msec is realized, while it takes a few minutes by a workstation.
(5) Masakazu Yagi and Tadashi Shibata, "An Associative-Processor-Based Mixed Signal System for Robust Grayscale Image Recognition," in the Proceedings of 2002 IEEE International Symposium on Circuits and Systems (ISCAS 2002), pp. V-137-V-140, Arizona, May 26-29, 2002.

### -Configurations of the storage section and the similarity evaluating section-

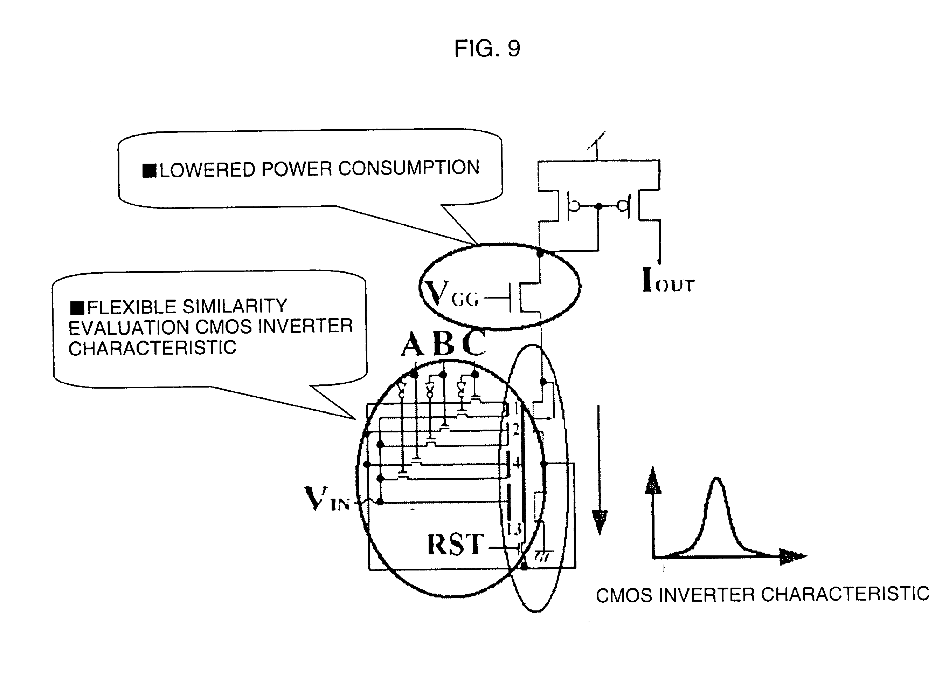

A basic circuit for retaining a data for one vector element and performing a similarity calculation thereof is shown in Fig. 9 (refer to the patent application (2) and the articles (6 to 8)).

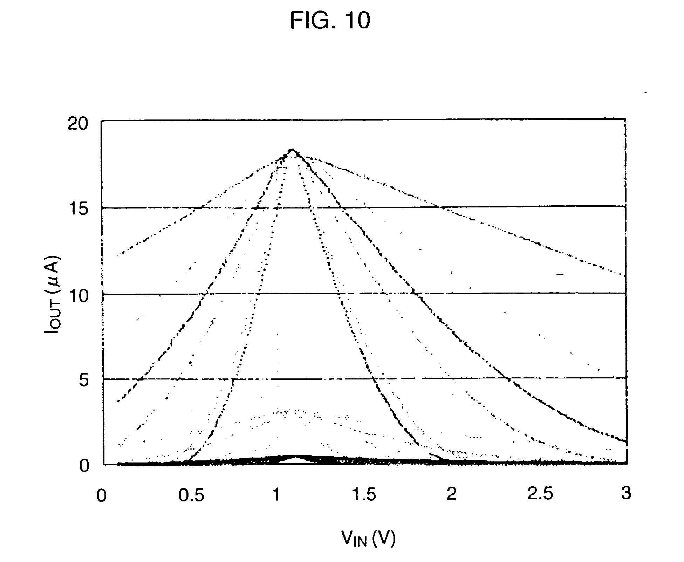

As shown in Fig. 9, this basic circuit has a function to decrease power consumption by changing an inputted voltage Vcc and a function to flexibly change a calculation evaluation method of a similarity calculator by changing inputted voltages A, B, and C. These characteristics are shown in Fig. 10. It is proved that the peak electric current value is decreased by lowering Vcc, and evaluation functions having a variety of sharpnesses are realized by changing the inputted voltages A, B, and C.

In this basic circuit, one element of a template vector, which is to be stored at the time of an initial reset operation, is inputted by a voltage. Thereafter, one element of a vector on which the similarity evaluation is performed is inputted by a voltage. The similarity information is converted into an electric current and outputted from Iout. The higher the similarity is, the more electric current is outputted. This Iout is used as the similarity evaluation value between template information and inputted vector information.

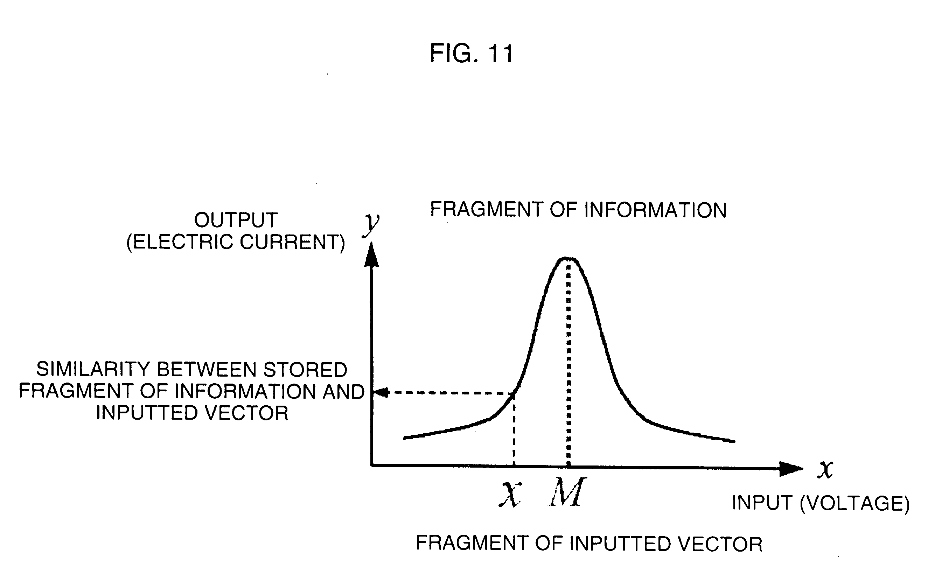

This basic circuit realizes a function shown in Fig. 11.

First of all, a fragment of information is stored as a voltage, and whose similarity with the one element of the vector that is inputted thereafter as a voltage is outputted as the electric current. The higher the similarity is, the more electric current flows.

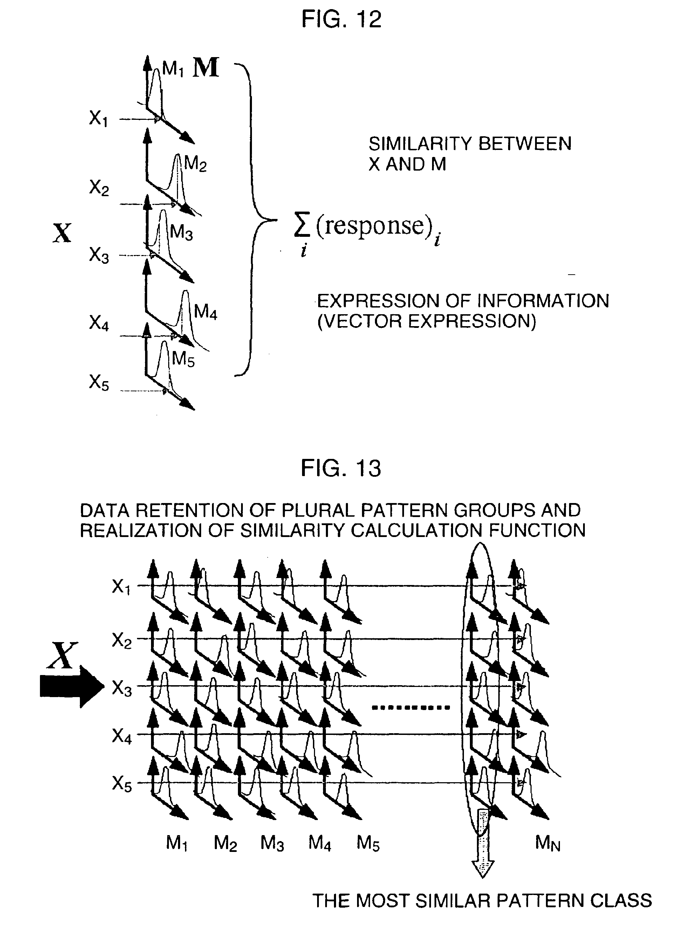

The function of this basic circuit is only the similarity calculation of one element of the vector, but when the sum of the output electric current is set as shown in Fig. 12, a circuit to output the similarity between a template vector M that is the information stored in advance and an input vector X can be easily realized. For example, when the vector is generated by the PAP technique, the number of dimensions of the vector is 64, so that 64 outputs should be connected. Note that this number should not necessarily be 64, and this number changes according to the number of dimensions of the vector to be used.

A functional block having a storage and similarity calculation functions is realized as shown in Fig. 13.

The circuits of Fig. 12 are arranged in parallel and the input vector X is simultaneously inputted to all the circuits. According to this configuration, it is possible to perform a high-speed simultaneous calculation of all the similarities between the inputted vector and the template vectors in a plurality of the pattern groups.

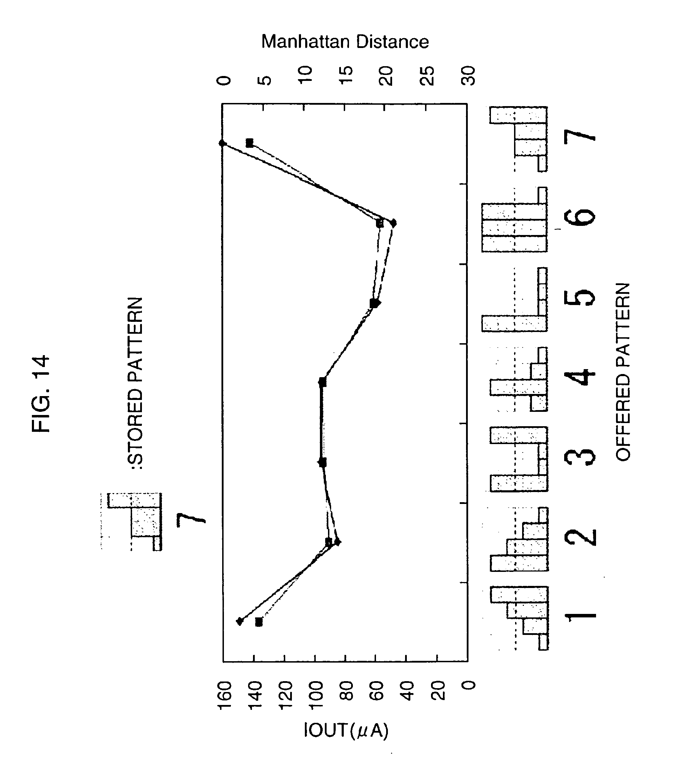

An example of realizing such a process is shown in Fig. 14.

In this system, the number of dimensions of the vector is determined as four. A pattern stored in this circuit is shown in an upper part of Fig. 14. In a lower part thereof, offered pattern groups are shown. The graph is showing the similarities between the stored pattern and the offered patterns. The blue line shows a logical value, and the red line shows a measured value. When the exact same pattern 7 is inputted, a large electric current flows to indicate a high similarity. When a pattern 1 that is similar to the pattern 7 is inputted, it also indicates a quite high similarity. However, it indicates a low similarity for a dissimilar pattern 6. In addition, regarding power consumption, even when the highest electric current flows due to the high similarity, the consumed power is approximately 160 µ A, which is realized to be quite low. Here, an example in which the number of dimensions is four is shown, but it should not necessarily be four. When the vector is generated by PAP, the number becomes 64, and when the other techniques of vector generation are used, the number changes depending on the number of dimensions of the vector. (patent application (2)) Japanese Patent Laid-open No. 2000-326158
(6) T. Yamasaki and T. Shibata, "An Analog Similarity Evaluation Circuit Featuring Variable Functional Forms," Proceedings of The 2001 IEEE International Symposium on Circuits and Systems (ISCAS 2001), pp. III-561-564, Sydney, Australia, May. 6-9, 2001.
(7) Toshihiko Yamasaki, Ken Yamamoto, and Tadashi Shibata, "Analog Pattern Classifier with Flexible-Matching Circuitry Based on Principal-Axis-Projection Vector Representation," Proceedings of the 27^{th} European Solid-State Circuits Conference (ESSCIRC 2001), Ed. by F. Dielacher and H. Grunbacher, pp. 212-215 (Frontier Group), Villach, Austria, September 18-20, 2001.
(8) T. Yamasaki and T. Shibata, "Analog Soft-Pattern-Matching Classifier Using Floating-Gate MOS Technology," Neural Information Processing Systems 14, in press.

### -Second Embodiment-

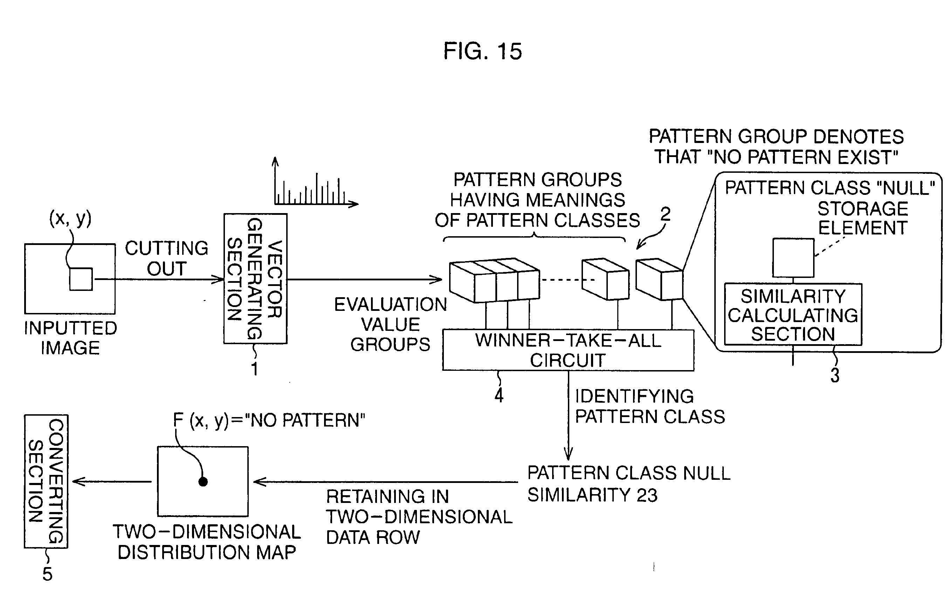

Fig. 15 is a schematic diagram showing a schematic configuration of an image processing device of the second embodiment.

This image processing device has mostly the same configuration as the image processing device of the first embodiment, but it has a difference in that the storage section 2 has a different pattern class. Specifically, this image processing device retains pattern groups that have two categories as follows. The pattern group of a first category is the same one as the pattern group that is stored in the first embodiment. The pattern group of a second category is a pattern group having a meaning that the pattern does not exist therein. In this embodiment, a Null pattern having no intensity is used. In this case, the pattern group contained in the second category should not necessarily be the Null pattern, where an image or a background image group preferred to be excluded from the object of recognition may be used. The other part has the same configuration as that of the first embodiment, which performs identification of the pattern class. At this time, for example, when a pattern group is identified as that there is "no pattern class exists" for it, information of "no pattern exist" is retained in the two-dimensional distribution map, which is different from the case of the first embodiment.

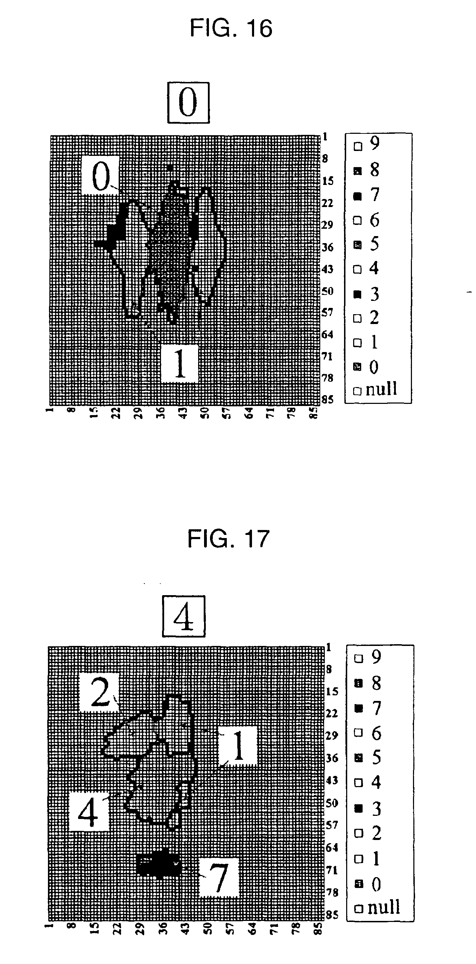

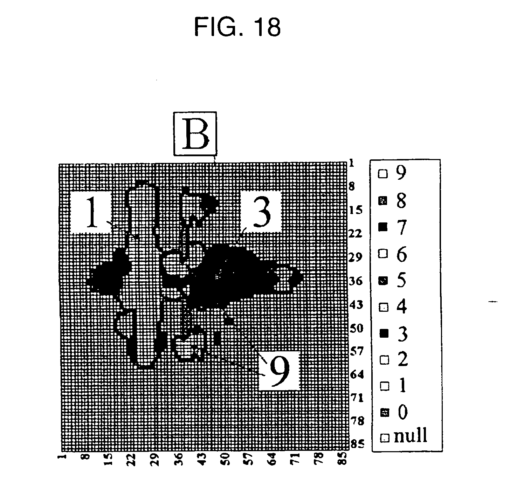

Examples of applying this technique to 150 × 150 pel images respectively containing characters "0(zero)," "4" and "B" of 72 pt Euclid font shown in Fig. 3 are shown in Fig. 16, Fig. 17 and Fig. 18. A character font should not necessarily be used for the object, and the image size should not necessarily be 150 × 150 pel.

Thus, the two categories as described above are included in the system, so that a highly effective characteristic extraction as compared to the first embodiment is realized.

Hereinafter, specific examples of applying the second embodiment to image processing will be explained.

### (Example 1)

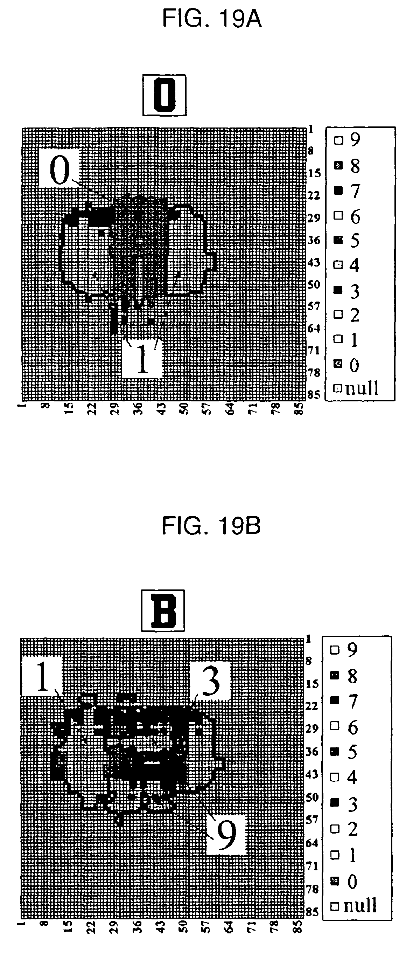

Examples of applying the technique of the second embodiment to 150 × 150 pel images respectively containing characters "0(zero)" and "B" of 72 pt Athletic font are shown in Figs. 19A and 19B. Although this font is quite different in shape from the characters of Euclid font shown in the second embodiment, it is proved that a function to robustly (being strong and flexible against adverse effects such as noise in an object) extract almost the same characteristic is realized.

### (Example 2)

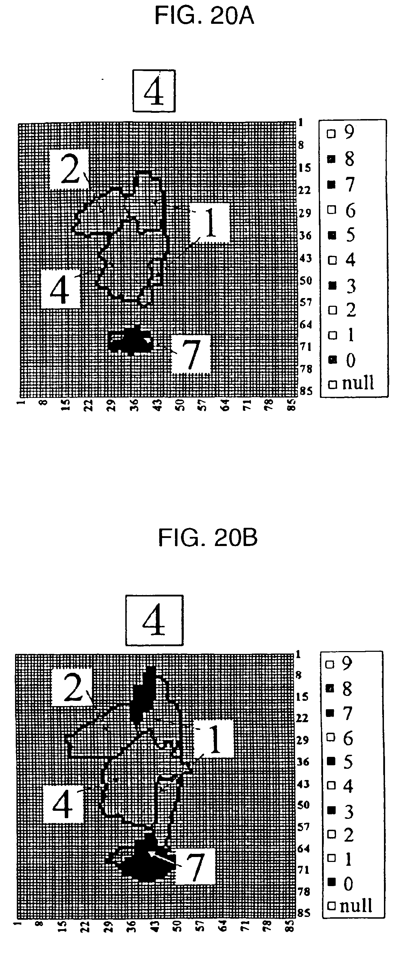

An example of applying the technique of the second embodiment to a 150 × 150 pel image containing a character "4" of 86 pt Euclid font that is an objective image enlarged by 20% and a distribution map obtained by applying the technique of the second embodiment to the character of 72 pt are shown at the same time in Figs. 20A and 20B.

Although the scale is changed, the obtained characteristic is not so different from that of the character of 72 pt, which proves that a highly robust characteristic extraction is realized. It is realized not only when the image is enlarged, but also when the image is scaled down.

### (Example 3)

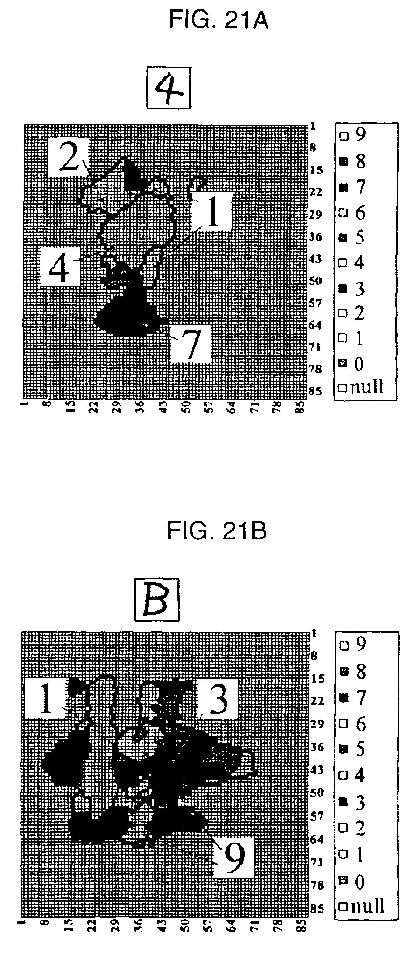

Examples of applying the technique of the second embodiment to 150 × 150 pel images containing hand-written characters "4" and "B" are shown in Figs. 21A and 21B.

Although the hand-written characters have even thickness of the line and deformation existing thereon as compared to the font characters, they are similar to the distribution maps of the characters of Euclid font shown in the second embodiment, so that their characteristics are robustly extracted.

### (Example 4)

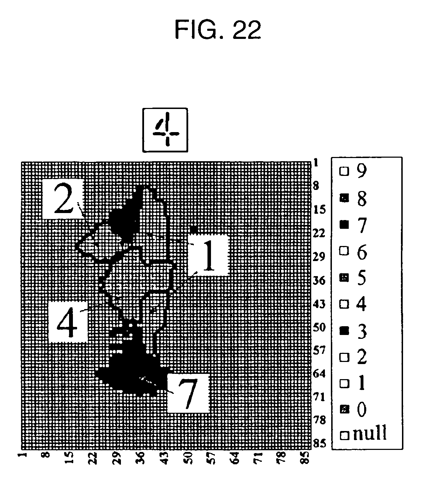

An example of applying the technique of the second embodiment to an image containing a hand-written character "4" that is partly missing is shown in Fig. 22.

Although it is hand-written, and characteristics such as components for denoting a cross or a corner that are used in the conventional recognition by software are removed therefrom, it is proved that the robust characteristic extraction that is similar to the result of applying the character "4" of Euclid font in the second embodiment is performed in this technique.

### (Example 5)

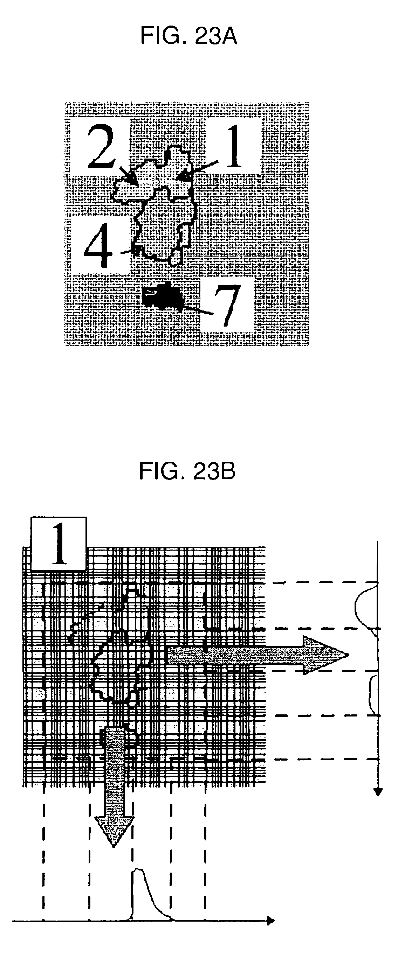

A technique (Step 5) for converting from the two-dimensional distribution map generated using the technique of the second embodiment into the one-dimensional numeric value row (vector) is shown in Figs. 23A and 23B.

Fig. 23A is showing a two-dimensional distribution map that is created by applying the technique similar to that of the second embodiment to a 150 × 150 pel image of 72 pt Euclid font. This size of the image should not necessarily be this measurement. Subsequently, from the two-dimensional distribution map created thereof, a size of 64 × 64 is cut out as shown in Fig. 23B. However, the size should not necessarily be 64 × 64.

Next, the numbers of position information corresponding respectively from the pattern class "0(zero)" to the pattern class "9" are projected in two directions, specifically in vertical and horizontal directions, and a smoothing processing is performed to combine the 16 elements into one. Here, the projection of the numbers of position information is performed on all the pattern classes, but it should not necessarily be applied to all the pattern classes. The projection of the position information is selectively performed as required. In addition, this smoothing technique does not necessarily combine the 16 elements into one. For example, it may be eight or 32. It differs depending on respective cases.

In Fig. 23B, the projection of the number of positions that corresponds to the pattern class "1" is performed. Next, the pattern class "0(zero)" to the pattern class "9" are sequentially arranged respectively in orders of projection information in a horizontal direction and projection information in a vertical direction to create a one-dimensional numeric value row, that is, the vector expression. Here, although the projection information of the position information for all the pattern classes is used, it should not necessarily be applied to all the pattern classes. The projection information is selectively used as required. In addition, the order of arrangement of the projection information should not necessarily be the above-described order. It differs according to the pattern class to be used, and also the vertical/horizontal projection information should not necessarily follow this order. Moreover, in addition to the generation of the vector expression by the above-described processing, a weight may also be applied after this processing to smooth out the vector expression.

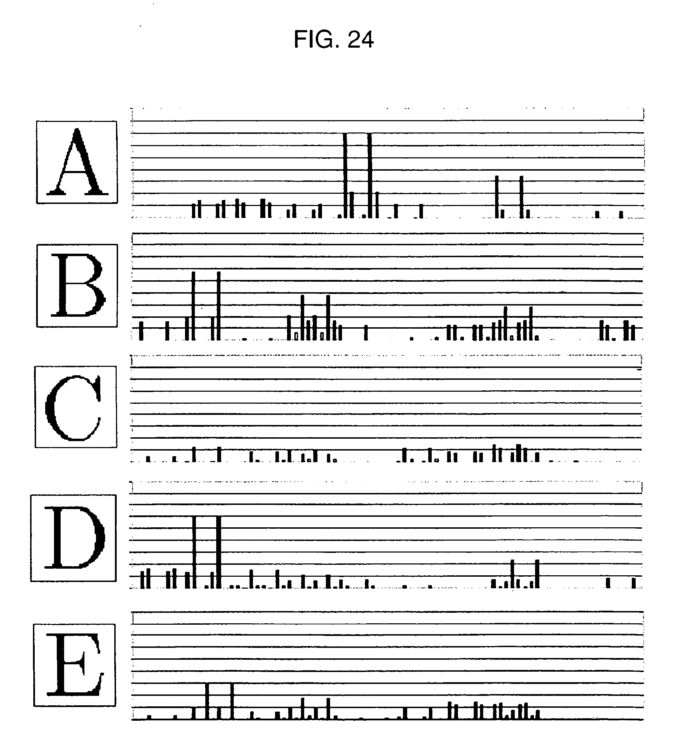

Examples of applying such a technique to 150 × 150 pel images containing characters "A," "B," "C," "D," and "E" of 72 pt Euclid font are shown in Fig. 24.

Note that the size of the images should not necessarily be this size. It is proved that the one-dimensional numeric value rows generated from the two-dimensional distribution maps that are expressed by the pattern classes of numeric characters respectively extract characteristics of each alphabetical character to be different expressions from each other. It is realized to use this technique to robustly perform the character recognition of alphabets.

### (Example 6)

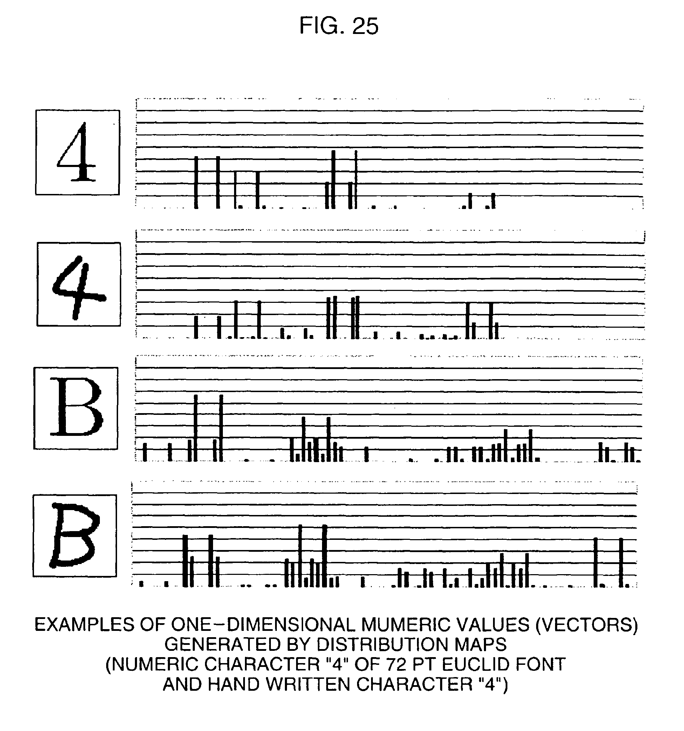

Examples of applying the technique of the example 5 to 150 × 150 pel images containing hand-written characters "4" and "B" together with examples of applying the technique to images of the same size containing the same characters of Euclid font are shown in Fig. 25.

Although the thickness and angle of the lines are quite different, remarkably high similarities as a vector are realized, thereby achieving the robust characteristic extraction.

### (Example 7)

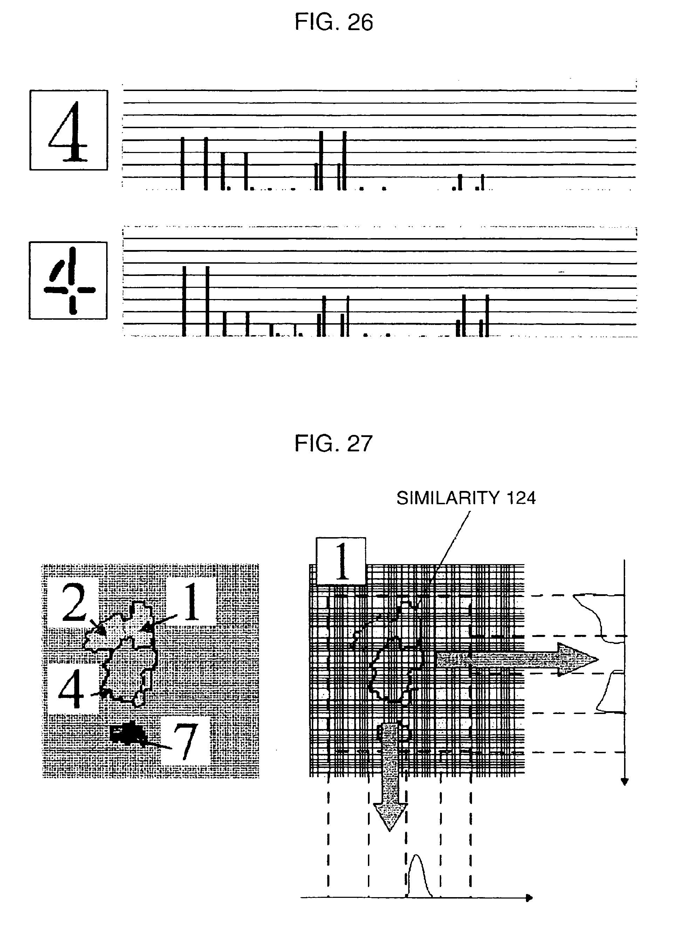

An example of applying the technique of the example 5 to a 150 × 150 pel image containing a hand-written character "4" that is partly missing is shown in Fig. 26 together with an example of applying the technique to an image of the same size containing a character "4" of 72 pt Euclid font.

Although a cross and a corner portions that are used as characteristics in the conventional algorithm are missing, a quite high similarity as a vector is represented, and the characteristic extraction is robustly realized.

### (Example 8)

Another technique (Step 6) for converting from the two-dimensional distribution map generated using the technique of the second embodiment into the one-dimensional numeric value row (vector) is shown in Fig. 27.

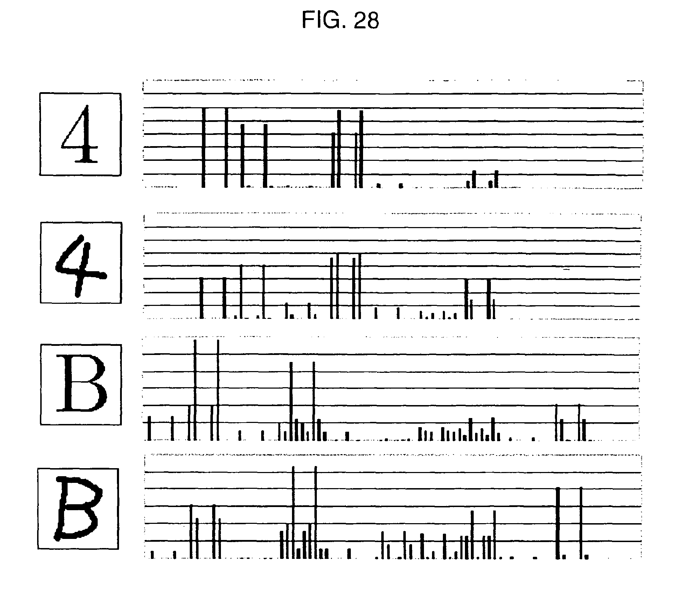

A manner to cut out a data of the two-dimensional distribution map to perform projection is the same as that of the example 5. However, in this example, the data to be added at the time of projection is not the number of position information, but the similarity of the pattern class at this position. Further, this addition of similarity is not necessarily performed as it is, and some kind of calculating process of a numeric value may be added thereto for robust recognition. In the example of Fig. 27, since the pattern class of the position shown in the diagram is "1" and the similarity is 124, 124 is added to the projection data when performing the addition at this position. Performing such a process realizes the robust and flexible vector expression. The vectors generated in this example are shown in Fig. 28.

Consequently, by projecting the similarity evaluation values, there is realized a highly robust conversion from the two-dimensional distribution map into the one-dimensional numeric value row (vector expression).

### (Example 9)

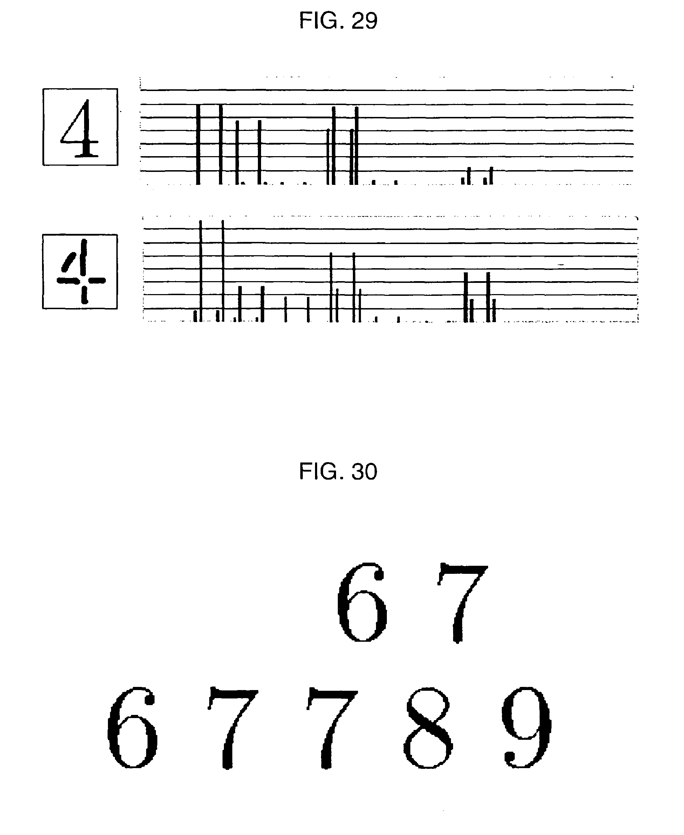

An example of applying the method shown in the example 8 to a 150 × 150 pel image containing a partly missing hand-written character "4" together with an example of applying the method to an image of the same size containing "4" of 72 pt Euclid font are shown in Fig. 29.

Although the cross and corner portions that are used as characteristics in the conventional algorithm are missing, a quite high similarity as a vector is represented, and the characteristic extraction is robustly realized.

### (Example 10)

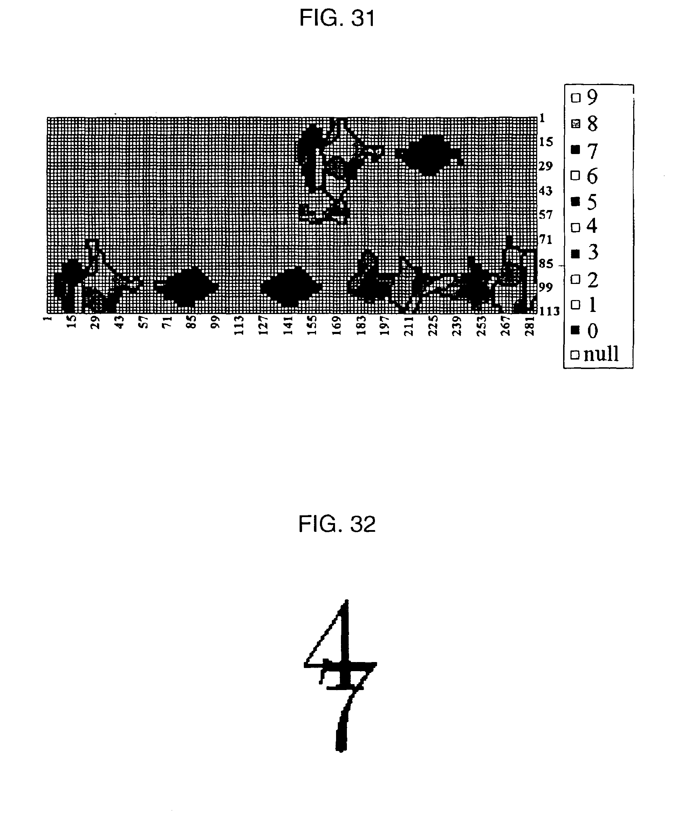

An example of applying the technique of the second embodiment to a 180 × 350 pel image containing numeric characters of 72 pt Euclid font shown in Fig. 30 is shown in Fig. 31.

Thus, even when the number of existing numeric characters is unknown, the function to robustly extract the characteristics is realized by generating the two-dimensional distribution map. Further, as a technique to convert the two-dimensional distribution map into the one-dimensional numeric value row, use of either the technique of the example 5 or the technique of the example 12 enables to properly and robustly recognize such objective images. Note that the technique to convert the two-dimensional distribution map into the one-dimensional one is not limited to these two techniques.

### (Example 11)

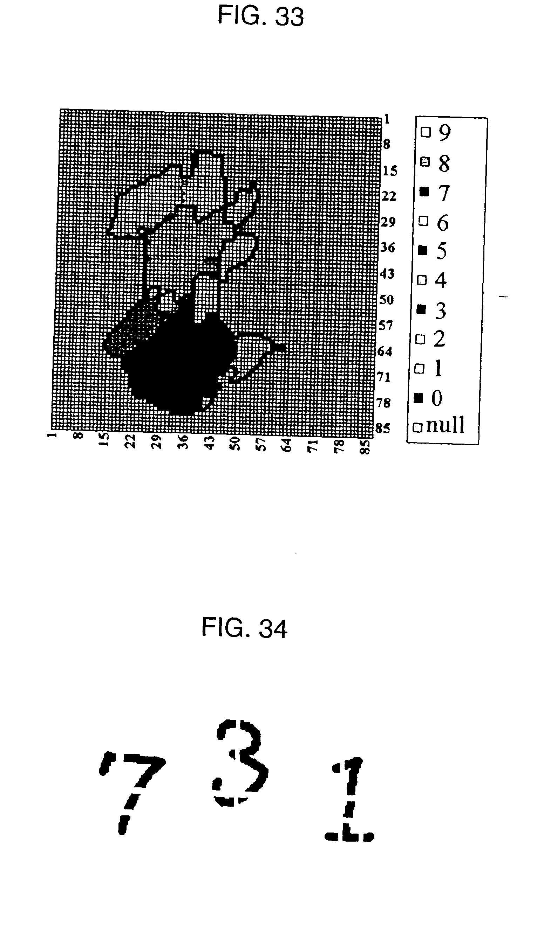

An example of applying the technique of the second embodiment to a 150 × 150 pel image containing overlapped numeric characters "4" and "7" of 72 pt Euclid font shown in Fig. 32 is shown in Fig. 33.

Although such a problem is difficult to solve, it is proved that the characteristics of "4" and "7" are respectively extracted robustly on the two-dimensional distribution map. Further, as a technique to convert the two-dimensional distribution map into the one-dimensional numeric value row, use of either the technique of the example 5 or the technique of the example 8 enables to properly and robustly recognize such overlapped images separately. Note that the technique to convert the two-dimensional distribution map into the one-dimensional one is not limited to these two techniques.

### (Example 12)

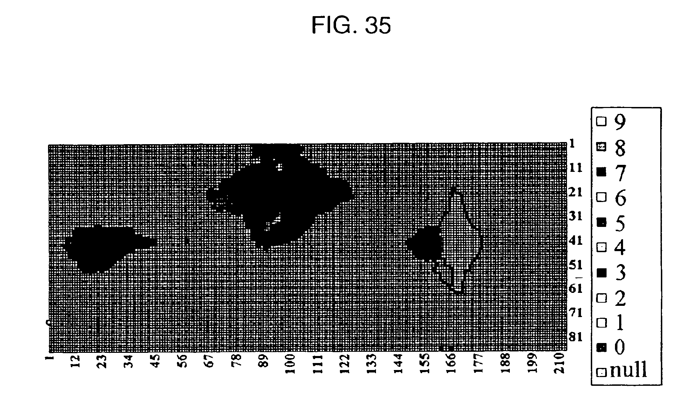

An example of applying the technique of the second embodiment to an image of hand-written numeric characters shown in Fig. 34 that are partly missing is shown in Fig. 35.

Even for such a partly missing image of hand-written characters, it is proved that the characteristics of objects are robustly extracted. Further, as a technique to convert the two-dimensional distribution map into the one-dimensional numeric value row, use of either the technique of the example 5 or the technique of the example 8 enables proper and robust recognition of such objective images. Note that the technique to convert the two-dimensional distribution map into the one-dimensional one is not limited to these two techniques.

### (Other embodiments of the present invention)

Each unit for configuring the image processing device according to the above-described first and second embodiments and examples and each step (such as Steps 1 to 6) of the image processing method can be realized by the operation of a program product stored in RAM and/or ROM of a computer. The present invention includes this program product and a computer readable storage medium for storing this program product.

Specifically, the program product is recorded in a recording medium such as a CD-ROM, or transmitted via several types of transmission medium to be provided to the computer. As the recording medium besides the CD-ROM for recording the program product, flexible disks, hard disks, magnetic tapes, magnetoptical disks and nonvolatile memory cards may be used. On the other hand, as the transmission medium of the program product, a communication medium (fixed line such as fiber optic, or a wireless line or the like) in a computer network (LAN, WAN such as internet, wireless communication network or the like) system for propagating and supplying the program product information in a form of carrier wave may be used.

Furthermore, not only when the computer executes the supplied program product to realize the functions of the above-described embodiments, but also when the program product cooperates with an active OS (operating system), other application software or the like operating on the computer to realize the functions of the above-described embodiments, as well as when the whole or a part of processing of the supplied program product is performed by a function expansion board or by a function expansion unit in the computer to realize the functions of the above-described embodiments, the present invention includes such a program product.

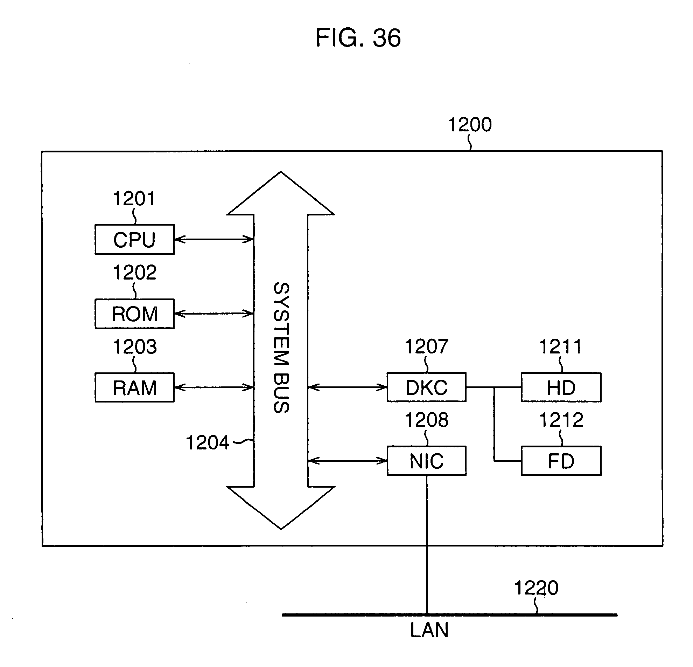

For example, Fig. 36 is a schematic diagram showing an internal configuration of a personal user terminal. In this Fig. 36, "1200" denotes a computer PC. PC 1200 includes a CPU 1201, executes device control software that is stored in a ROM 1202 or a hard disk (HD) 1211 or is supplied from a flexible disk drive (FD) 1212, and performs overall control of respective devices connected to a system bus 1204.

According to the present invention, there are realized an image processing device and an image processing method, a computer program product and a storage medium that enable recognition of a similar image as a similar image data when an image processing of the similar image is performed, and are capable of precisely recognizing a relatively complicated image.

The present embodiments are to be considered in all respects as illustrative and no restrictive, and all changes which come within the meaning and range of equivalency of the claims are therefore intended to be embraced therein. The invention may be embodied in other specific forms without departing from the spirit or essential characteristics thereof.

## Claims

1. An image processing device for processing an image data of an inputted image and extracting semantic information contained in the image data, the image processing device comprising:
a first unit having a plurality of pattern groups that contain at least one reference pattern belonging to a predetermined class;
a second unit for extracting the image data of a region that is defined corresponding to a predetermined position inside the inputted image, checking the image data with each of the reference patterns contained in each of the pattern groups, and evaluating a similarity between each of the reference patterns and the image data; and
a third unit for performing a predetermined calculation on each evaluation value of the similarity to determine at least one evaluation value, identifying the class of the reference pattern corresponding to the determined evaluation value, and making the evaluation value and the identified class of said reference pattern correspond to the predetermined position.

2. The image processing device according to claim 1,
wherein the evaluation value and the class are identified for each of a plurality of the predetermined positions of the inputted image, and the evaluation value and the class are made to correspond to the plurality of the predetermined positions to thereby create a distribution map.

3. The image processing device according to claim 2, further comprising a fourth unit for creating a one-dimensional data row from the distribution map,
wherein said fourth unit performs a process of adding the number of predetermined positions belonging to the same class in a predetermined direction.

4. The image processing device according to claim 2 or 3, further comprising a fifth unit for creating a one-dimensional data row from the distribution map,
wherein said fifth unit performs a process of adding the evaluation value that corresponds to the predetermined position belonging to the same class in a predetermined direction.

5. The image processing device according to claim 1, 2, 3 or 4,
wherein the plurality of the pattern groups are categorized in at least two categories, each of the pattern groups that belongs to a first category serves to identify the evaluation value and the class at the predetermined position of the inputted image, and each of the pattern groups that belongs to a second category is given a meaning that, when each of the pattern groups is selected corresponding to the predetermined position of the inputted image, the reference pattern does not exist for the position.

6. The device according to any one of claims 1 to 5, further comprising a sixth unit for expressing a vector of the image data of the region that is defined corresponding to the predetermined position inside the inputted image,
wherein said second unit retains each of the reference patterns as a vector and checks this vector with the vector of the image data to evaluate the similarity.

7. An image processing method for processing an image data of an inputted image and extracting semantic information contained in the image data, the image processing method comprising:
a first step of extracting the image data of a region that is defined corresponding to a predetermined position inside the inputted image;
a second step of storing a plurality of pattern groups that contain at least one reference pattern belonging to a predetermined class, checking the image data with each of the reference patterns contained in each of the pattern groups, and evaluating a similarity between each of the reference patterns and the image data; and
a third step of performing a predetermined calculation on each evaluation value of the similarity to determine at least one evaluation value, identifying the class of the reference pattern corresponding to the determined evaluation value, and making the evaluation value and the identified class of the reference pattern correspond to the predetermined position.

8. The image processing method according to the claim 7,
wherein the evaluation value and the class are identified for each of a plurality of the predetermined positions of the inputted image, and the evaluation value and the class are made to correspond to the plurality of the predetermined positions to thereby create a distribution map.

9. The image processing method according to claim 8, further comprising a fourth step for creating a one-dimensional data row from the distribution map,
wherein said fourth step performs a process of adding the number of predetermined positions belonging to the same class in a predetermined direction.

10. The image processing method according to claim 8 or 9, further comprising a fifth step for creating a one-dimensional data row from the distribution map,
wherein said fifth step performs a process of adding the evaluation value that corresponds to the predetermined position belonging to the same class in a predetermined direction.

11. The image processing method according to claim 7, 8, 9 or 10,
wherein the plurality of the pattern groups are categorized in at least two categories, each of the pattern groups that belongs to a first category serves to identify the evaluation value and the class at the predetermined position of the inputted image, and each of the pattern groups that belongs to a second category is given a meaning that, when each_of the pattern groups is selected corresponding to the predetermined position of the inputted image, the reference pattern does not exist for the position.

12. The method according to any one of claims 7 to 11, further comprising a sixth step for expressing a vector of the image data of the region that is defined corresponding to the predetermined position inside the inputted image,
wherein said second step retains each of the reference patterns as a vector and checks this vector with the vector of the image data to evaluate the similarity.

13. A computer program product for image processing comprising, when processing an image data of an inputted image and extracting semantic information that is contained in the image data:
a first program code means for extracting the image data from a region that is defined corresponding to a predetermined position inside the inputted image;
a second program code means for storing a plurality of pattern groups that contain at least one reference pattern belonging to a predetermined class, checking the image data with each of the reference patterns contained in each of the pattern groups, and evaluating similarity between each of the reference patterns and the image data; and
a third program code means for performing a predetermined calculation on each evaluation value of the similarity to determine at least one evaluation value, identifying the class of the reference pattern corresponding to the determined evaluation value, and making the evaluation value and the identified class of the reference pattern correspond to the predetermined position.

14. A computer readable storage medium for storing a computer program product for image processing,
wherein said computer program product for image processing comprises, when processing an image data of an inputted image and extracting semantic information that is contained in the image data:
a first program code means for extracting the image data from a region that is defined corresponding to a predetermined position inside the inputted image;
a second program code means for storing a plurality of pattern groups that contain at least one reference pattern belonging to a predetermined class, checking the image data with each of the reference patterns contained in each of the pattern groups, and evaluating similarity between each of the reference patterns and the image data; and
a third program code means for performing a predetermined calculation on each evaluation value_of the similarity to determine at least one evaluation value, identifying the class of the reference pattern corresponding to the determined evaluation value, and making the evaluation value and the identified class of the reference pattern correspond to the predetermined position.
